(19) Europäisches Patentamt
European Patent Office
Office européen des brevets

(11) Veröffentlichungsnummer: **0 218 064**
**B1**

(12) # EUROPÄISCHE PATENTSCHRIFT

(45) Veröffentlichungstag der Patentschrift: **01.02.89**

(51) Int. Cl.⁴: **C08G 75/23**

(21) Anmeldenummer: **86111605.1**

(22) Anmeldetag: **22.08.86**

(54) **Verfahren zur Herstellung von Polyethersulfonen.**

(30) Priorität: **03.09.85 DE 3531361**

(43) Veröffentlichungstag der Anmeldung: **15.04.87 Patentblatt 87/16**

(45) Bekanntmachung des Hinweises auf die Patenterteilung: **01.02.89 Patentblatt 89/5**

(84) Benannte Vertragsstaaten: **DE FR GB IT**

(56) Entgegenhaltungen: **DE-A-1 570 617**

(73) Patentinhaber: **BAYER AG, Konzernverwaltung RP Patentabteilung, D-5090 Leverkusen 1 Bayerwerk(DE)**

(72) Erfinder: **Mayska, Paul Johannes, Dr., Bodelschwinghstrasse 18, D-4150 Krefeld(DE)**
Erfinder: **Tresper, Erhard, Dr., Dahlerdyk 154, D-4150 Krefeld(DE)**

**EP 0 218 064 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der vorliegenden Erfindung ist die Herstellung von Polyethersulfonen der Formel (I)

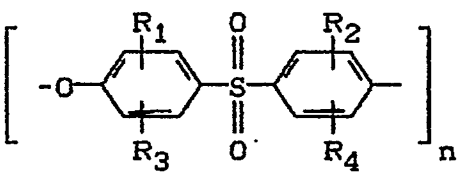

(I),

worin
n eine ganze Zahl von 5 bis 200 ist,
und worin $R_1$, $R_2$, $R_3$ und $R_4$ gleich oder verschieden und Wasserstoff, $C_1$–$C_6$-Alkyl, Phenyl oder Halogen, beispielsweise Chlor oder Brom, sind, das dadurch gekennzeichnet ist, daß man Polycarbonate der Formel (II)

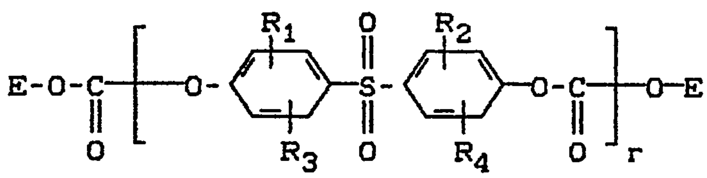

(II)

worin $R_1$ bis $R_4$ die für Formel (I) genannte Bedeutung haben, r eine ganze Zahl von 5 bis 200 ist und E–O– ein Monophenolatrest ist, in Anwesenheit von basischen oder neutralen Katalysatoren in Mengen von 0,00001 bis 5 Gew.-%, vorzugsweise von 0,001 bis 0,1 Gew.-%, bezogen auf Gewicht an Polycarbonat (II), zwischen 10 Minuten und 10 Stunden, vorzugsweise zwischen 10 Minuten und 60 Minuten, bei Drücken von 0,01 bar bis 1 bar, vorzugsweise von 0,1 bar bis 1 bar, auf Temperaturen von 250°C bis 450°C, vorzugsweise von 300°C bis 400°C erhitzt.

Bevorzugte Werte für r sind 100 bis 150.

Bevorzugte aromatische Reste E sind Phenyl und/oder Kresyl.

Bevorzugte Reste $R_1$ bis $R_4$ sind H oder Methyl.

Basische Katalysatoren sind beispielsweise die Alkalisalze von schwach sauren Verbindungen, wie das Dikalium- oder Dinatriumsalz des Bisphenol-A, Kalium- oder Natriumsalz des Cumylphenols oder Kaliumacetat.

Neutrale Umesterungskatalysatoren sind beispielsweise Butyltitanat oder Antimontrioxid.

Die Katalysatoren können separat zugegeben werden oder via Herstellung der Polycarbonate (II) eingebracht werden.

Die Polycarbonate der Formel (II) sind bekannte Verbindungen (siehe beispielsweise US-Patent 3 271 367 und DE-AS 1 007 996; sie können beispielsweise von den Sulfondiphenolen (III)

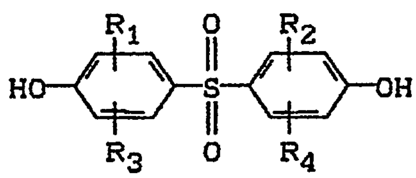

(III)

mit Diphenolcarbonat nach dem bekannten (siehe beispielsweise US-Patent 3 271 367, Beispiel 1) Polycarbonatumesterungsverfahren hergestellt werden. In diesem Fall kann nach erfolgter Phenolabspaltung in die Polyetherherstellung sofort übergeleitet werden (siehe Beispiel 2 der vorliegenden Anmeldung).

Die Herstellung der niedermolekularen Ausgangsprodukte der Formel (II) mit r = 1 bis 3 erfolgt durch bekannte Reaktion des Dihydroxydiphenylsulfons mit Chlorameisensäurephenylester oder durch Phosgenieren einer Mischung der Dihydroxyverbindung und des Monophenols im entsprechenden Molverhältnis Dihydroxyverbindung : Monophenol wie 1 : 2 beziehungsweise 2 : 2, beziehungsweise 3 : 2.

In einer bevorzugten Ausführungsform kann die Herstellung der Polycarbonate (II) nach dem Schmelzumesterungsverfahren beispielsweise aus Dicarbonaten (IIa)

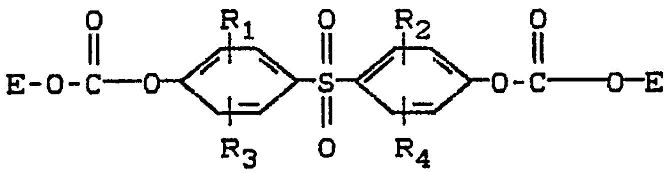

(IIa).

worin E beispielsweise Phenyl ist und $R_1$ bis $R_4$ die für Formel I genannte Bedeutung haben, entsprechend der Lehre des GB-PS 808 489 durchgeführt werden, also auf 170°C bis 200°C mit basischen Umesterungskatalysatoren, wie Na-benzoat, erhitzt werden und nach Entfernung des Diphenylcarbonats dann direkt die erfindungsgemäße Polyetherherstellung angekoppelt werden, (Siehe Beispiel 3 der vorliegenden Erfindung).

Die erfindungsgemäße Herstellung der Polyethersulfone kann beispielsweise in einem Kneter oder einer Schneckenmaschine durchgeführt werden. Die Reaktionsgeschwindigkeit kann über die $CO_2$-Abspaltung kontrolliert werden und die Temperaturführung darauf abgestimmt werden.

Die erfindungsgemäß hergestellten Polyethersulfone können direkt über die Schmelze zu Granulat extrudiert werden.

Polyethersulfone sind bekannt (siehe beispielsweise Kunststoffe 69 (1979), Seiten 3 bis 5; Kirk-Othmer, Encyclopedia of Chemical Technology, 3. Edition, Volume 18, Seiten 832 bis 848 und Kirk-Othmer, loc. cit. Seiten 605 bis 610).

Die Herstellung der Polyethersulfone der Formel (I) erfolgte bislang entweder durch Friedel-Crafts-Kondensation von Arylsulfonylhalogeniden mit einer aromatischen Verbindung gemäß Gleichung A

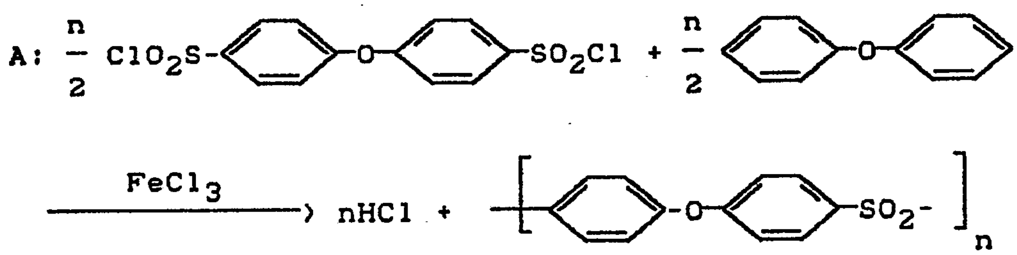


Eine andere Herstellung erfolgt durch Polyetherbildung aus Dihalogeniden und gegebenenfalls Diphenolen gemäß den Gleichungen B und C:

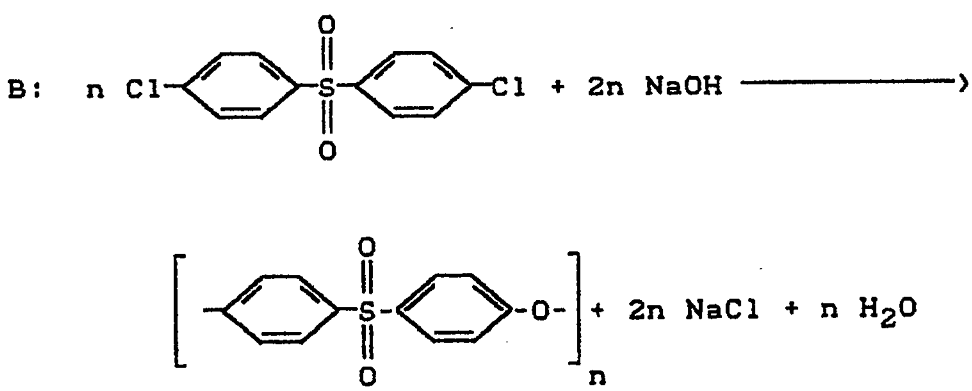

C:
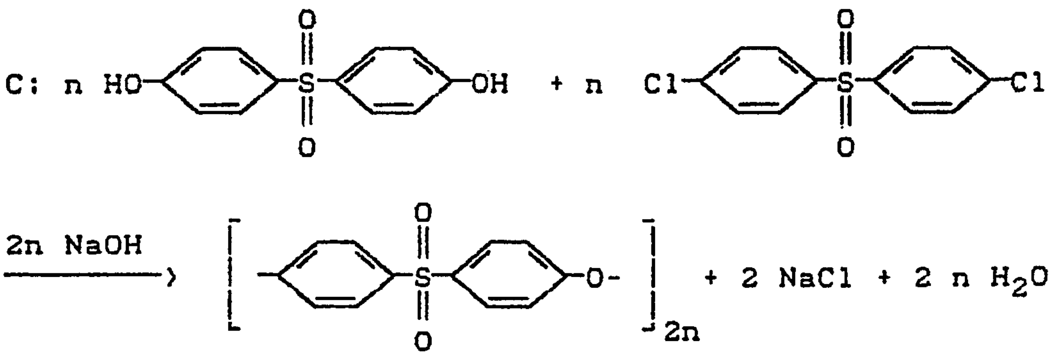


Eine dritte Herstellungsweise ist die Kondensation eines Alkalimetallsalzes eines Halogenphenols unter Austritt von Alkalimetallhalogenid gemäß Gleichung D:

D:
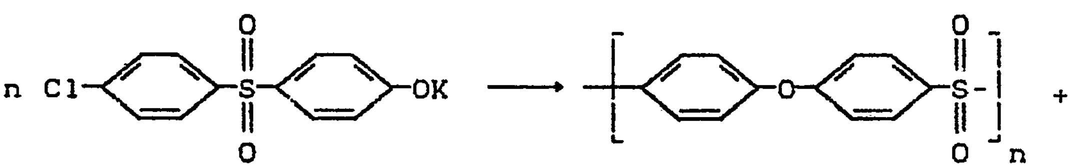

Während oder nach der Durchführung des erfindungsgemäßen Verfahrens können noch für Polyethersulfone übliche Stabilisatoren, Fließmittel wie chlorierte Diphenyle, Farbstoffe, Pigmente, Füllstoffe, Glasfasern oder Glaskugeln in den üblichen Mengen zugesetzt werden.

Die nach dem erfindungsgemäßen Verfahren erhaltenen Polyethersulfone haben mittlere Zahlenmittelmolekulargewichte $\bar{M}_n$ zwischen etwa 1000 und 50.000.

Die erhaltenen Polyethersulfone besitzen eine gute Wärmeformbeständigkeit und eine gute Lösungsmittelbeständigkeit. Sie lassen sich je nach Molekulargewicht zu verschiedenen Formkörpern wie Fasern, Folien, Platten, zu Schäumen oder zu Beschichtungen verarbeiten, die Anwendung finden auf dem Elektrosektor.

Niedermolekulare Polyethersulfone ( $\bar{M}_n$ bis max. 5000) lassen sich auch als Flammschutzmittel für Thermoplaste verwenden.

Beispiel 1

Polycarbonat aus 4,4-Dihydroxy-diphenylsulfcn mit $\bar{M}_w$ (Gewichtsmittelmolekulargewicht, ermittelt mittels Lichtzerstreuung) von 20.000, hergestellt durch Umesterung des Bisphenylcarbonats von 4,4'-Dihydroxydiphenylsulfon (s. Beispiel 3), wird in einem Kneter auf eine Temperatur von 250–280°C gebracht. Es spaltet sich Kohlendioxid ab. Das Produkt ist nach der Elementaranalyse und IR-Spektrum ein Polyethersulfon. Schmelzviskosität bei 380°C: 120 Pas., was einem $\bar{M}_n$ von etwa 25.000 entspricht.

Beispiel 2

100 g 4,4'-Dihydroxydiphenylsulfon werden mit 87,8 g Diphenylcarbonat und 0,13 g des Di-Kaliumsalzes des 4,4'-Dihydroxydiphenylsulfons vermischt und unter Phenolabspaltung aufgeschmolzen. Bei einer Temperatur von 250–280°C spaltet sich Kohlendioxid ab. Nach 120 Minuten erhält man ein Polymer mit einem Schmelzpunkt von 225°C. Das Produkt ist nach der Elementaranalyse und IR-Spektrum ein Polyethersulfon. Schmelzviskosität bei 380°C: 80 Pas.

Beispiel 3

49 g Bis(oxyphenyl)sulfon-di-(phenyl)carbonat, das auf bekannte Weise aus 1 Mol 4,4'-Dihydroxydiphenylsulfon und 2 Molen Chlorkohlensäurephenylester hergestellt wurde, werden mit 0,03 g des Dikaliumsalzes des Bisphenol A vermischt und aufgeschmolzen. Bei ca. 170°C setzt die Diphenylcarbonatabspaltung ein. Wenn die Diphenylcarbonatabspaltung nachläßt, wird die Temperatur langsam auf 300°C gesteigert. Das Vakuum verschlechtert sich von 0,2 mbar auf 4 mbar.

Man erhitzt so lange, bis die $CO_2$-Abspaltung abgeschlossen ist. Man erhält ein Polymer, das nach der Elementaranalyse ein Polysulfon ist. Im IR-Spektrum ist keine Carbonylbande mehr vorhanden. Ausbeute: 95% der Theorie. Das Polymer läßt sich zu Formkörpern mit einer Dauertemperaturbeständigkeit von ca. 180°C verarbeiten. Schmelzviskosität bei 380°C: 100 Pas.

**Patentansprüche**

1. Verfahren zur Herstellung von Polyethersulfonen der Formel (I)

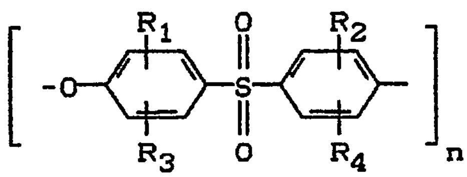

(I),

worin
n eine ganze Zahl von 5 bis 200 ist,
und worin $R_1$, $R_2$, $R_3$ und $R_4$ gleich oder verschieden sind und Wasserstoff, $C_1$–$C_6$-Alkyl, Phenyl oder Halogen sind, dadurch gekennzeichnet, daß man Polycarbonate der Formel (II)

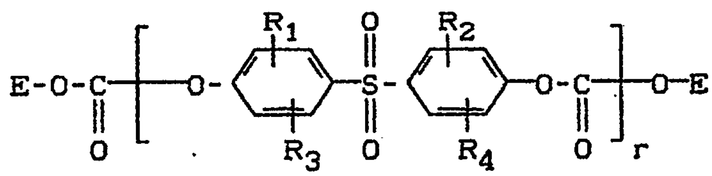

(II)

worin $R_1$ bis $R_4$ die für Formel (I) genannte Bedeutung haben, r eine ganze Zahl von 5 bis 200 ist und E–O– ein Monophenolatrest ist, in Anwesenheit von basischen oder neutralen Katalysatoren in Mengen von 0,00001 bis 5 Gew.-%, bezogen auf Gewicht an Polycarbonat (II), zwischen 10 Minuten und 10 Stunden bei Drücken von 0,01 bar bis 1 bar auf Temperaturen von 250°C bis 450°C erhitzt.

2. Verfahren gemäß Anspruch 1, dadurch gekennzeichnet, daß man auf Temperaturen von 300°C bis 400°C erhitzt.

3. Verfahren gemäß Ansprüche 1 und 2, dadurch gekennzeichnet, daß man zwischen 10 Minuten und 60 Minuten erhitzt.

4. Verfahren gemäß Ansprüche 1 bis 3, dadurch gekennzeichnet, daß man bei Drücken von 0,1 bar bis 1,0 bar erhitzt.

5. Verfahren gemäß Ansprüche 1 bis 4, dadurch gekennzeichnet, daß man die Polycarbonate (II) in situ nach dem Umesterungsverfahren herstellt und nach erfolgter Phenolabspaltung mit der Polyetherherstellung beginnt.

6. Verfahren gemäß Ansprüche 1 bis 4, dadurch gekennzeichnet, daß man Dicarbonate der Formel (IIa)

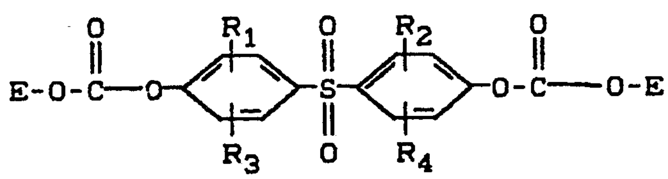

(IIa)

worin E Phenyl ist und $R_1$ bis $R_4$ die für Formel (I) genannte Bedeutung haben, auf 170°C bis 200°C mit basischen Umesterungskatalysatoren erhitzt und nach der Entfernung des Diphenylcarbonats mit der Polyetherherstellung beginnt.

**Claims**

1. A process for the production of polyethersulfones corresponding to formula (I)

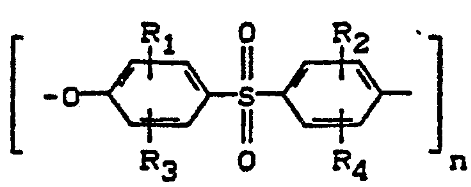

(I),

in which
n is an integer of 5 to 200 and
$R_1$, $R_2$, $R_3$ and $R_4$ may be the same or different and represent hydrogen, $C_1$–$C_6$ alkyl, phenyl or halogen, characterized in that polycarbonates corresponding to formula (II)

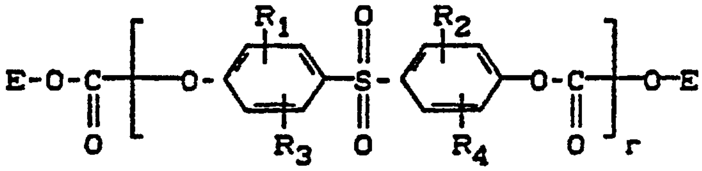

(II)

in which
$R_1$ to $R_4$ are as defined for formula (I), r is integer of 5 to 200 and E–O– is a monophenolate residue, are heated in the presence of basic or neutral catalysts in quantities of from 0.00001 to 5% by weight, based on the weight of polycarbonate (II), for 10 minutes to 10 hours at temperatures of 250°C to 450°C under pressures of 0.01 bar to 1 bar.

2. A process as claimed in claim 1, characterized in that the polycarbonates (II) are heated at temperatures of 300°C to 400°C.

3. A process as claimed in claims 1 and 2, characterized in that the polycarbonates (II) are heated for 10 minutes to 60 minutes.

4. A process as claimed in claims 1 to 3, characterized in that the polycarbonates (II) are heated under pressures of 0.1 bar to 1.0 bar.

5. A process as claimed in claims 1 to 4, characterized in that the polycarbonates (II) are prepared in situ by the transesterification process and in that production of the polyether is commenced after the elimination of phenol.

6. A process as claimed in claims 1 to 4, characterized in that dicarbonates corresponding to formula (IIa)

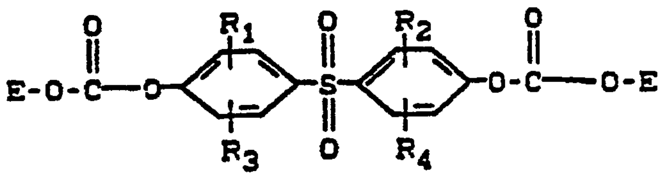

(IIa)

in which E is phenyl and $R_1$ to $R_4$ are as defined for formula (I), are heated at 170°C to 200°C in the presence of basic transesterification catalysts and in that production of the polyether is commenced after removal of the diphenyl carbonate.

## Revendications

1. Procédé pour préparer des polyéther-sulfones de formule (I)

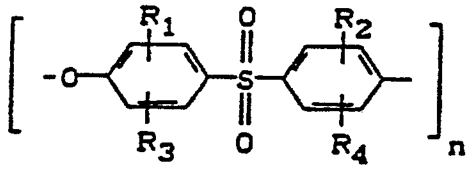

(I),

dans laquelle
n'est un nombre entier valant 5 à 200, et
$R_1$, $R_2$, $R_3$ et $R_4$ sont identiques ou différents et représentent chacun un atome d'hydrogène, un groupe alkyle en $C_{1-6}$, un groupe phényle ou un atome d'halogène, procédé caractérisé en ce qu'on chauffe des polycarbonates de formule (II)

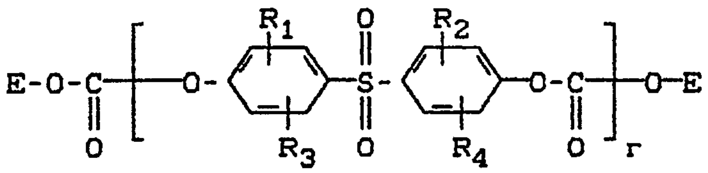

(II)

dans laquelle $R_1$ à $R_4$ ont le sens indiqué pour la formule (I), r est un nombre entier valant 5 à 200 et E–O– est un reste monophénolate, en opérant en présence de catalyseurs basiques ou neutres, présents en des quantités de 0,00001 à 5% en poids, par rapport au poids du polycarbonate (II), en chauffant entre 10 min et 10 h sous des pressions de 0,01 bar à 1 bar à des températures de 250°C jusqu'à 450°C.

2. Procédé selon la revendication 1, caractérisé en ce qu'on chauffe jusqu'à des températures de 300°C à 400°C.

3. Procédé selon les revendications 1 ou 2, caractérisé en ce qu'on chauffe pendant une période comprise entre 10 min et 60 min.

4. Procédé selon les revendications 1 à 3, caractérisé en ce qu'on chauffe sous des pressions de 0,1 bar à 1,0 bar.

5. Procédé selon les revendications 1 à 4, caractérisé en ce qu'on prépare les polycarbonates (II) sur place ("in situ") selon le procédé d'échange de groupes esters (transestérification) et, une fois la séparation de phénol obtenue, on passe à la préparation du polyéther.

6. Procédé selon les revendications 1 à 4, caractérisé en ce qu'on chauffe des dicarbonates de formule (IIa)

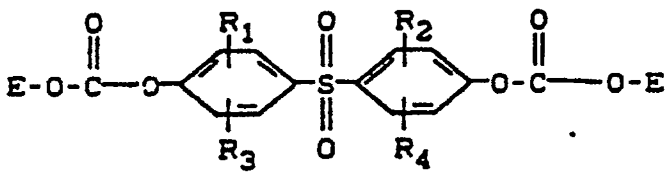

(IIa)

dans laquelle E représente un groupe phényle et $R_1$ à $R_4$ ont le sens indiqué à propos de la formule (I), jusqu'à 170°C à 200°C avec des catalyseurs basiques de transestérification et, après enlèvement et séparation du carbonate de diphényle, on commence la préparation du polyéther.